(19) Europäisches Patentamt
European Patent Office
Office européen des brevets

(11) **EP 3 499 267 B1**

(12) **EUROPÄISCHE PATENTSCHRIFT**

(45) Veröffentlichungstag und Bekanntmachung des Hinweises auf die Patenterteilung:
**19.02.2020  Patentblatt 2020/08**

(51) Int Cl.:
**G01S 17/02** *(2020.01)*      **G01S 17/48** *(2006.01)*
**G01V 8/20** *(2006.01)*

(21) Anmeldenummer: **17207042.7**

(22) Anmeldetag: **13.12.2017**

(54) **TRIANGULATIONSLICHTTASTER**

TRIANGULATION LIGHT SENSOR

CAPTEUR PHOTOÉLECTRIQUE TRIGONOMÉTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.06.2019  Patentblatt 2019/25**

(73) Patentinhaber: **SICK AG**
**79183 Waldkirch (DE)**

(72) Erfinder:
• **WASLOWSKI, Kai**
  **79312 Emmendingen (DE)**
• **HÖRSCH, Ingolf**
  **79102 Freiburg (DE)**
• **MERETTIG, Gerhard**
  **79350 Sexau (DE)**
• **GÖTZ, Matthias**
  **79104 Freiburg (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
**DE-A1- 10 138 609      DE-U1-202014 103 068**

**Beschreibung**

Die vorliegende Erfindung betrifft einen Triangulationslichttaster zur Detektion von Objekten auf einer Förderstrecke, mit einem Lichtsender zum Aussenden von Sendelicht in eine Detektionszone, welche sich über einen Teilbereich der Förderstrecke erstreckt, einem ein Array von Empfangselementen aufweisenden Lichtempfänger zum Empfangen von Licht, welches aus der Detektionszone von einem zu detektierenden Objekt oder der Förderstrecke remittiert wird, wobei sich das Array von Empfangselementen zumindest in einer Triangulationsrichtung erstreckt, und wobei die Empfangselemente jeweilige Empfangssignale erzeugen, einer im Strahlengang zwischen Detektionszone und Lichtempfänger angeordneten Empfangsoptik zum Erzeugen zumindest eines Lichtflecks aus dem remittierten Licht auf dem Lichtempfänger, wobei sich die Position des zumindest einen Lichtflecks auf dem Lichtempfänger in der Triangulationsrichtung in Abhängigkeit von dem Abstand eines Auftreffpunkts des Sendelichts auf einem zu detektierenden Objekt oder der Förderstrecke von dem Triangulationslichttaster ergibt, und einer Auswerteeinheit, welche zum Erzeugen eines Objekterfassungssignals aus den Empfangssignalen ausgelegt ist, wobei nur dann ein Objekterfassungssignal erzeugt wird, wenn ein anhand der Position des zumindest einen Lichtflecks auf dem Lichtempfänger ermittelte Abstandswert des Auftreffpunkts einen vorgegebenen Abstandsschwellenwert unterschreitet.

Es ist bekannt, die Anwesenheit und/oder Entfernung von Gegenständen in einem Überwachungsbereich mit einem Lichttaster zu bestimmen, der nach dem Triangulationsprinzip arbeitet. Ein derartiger Triangulationslichttaster umfasst einen Lichtsender, beispielsweise eine Leuchtdiode oder einen Laser, und gegebenenfalls eine Sendeoptik, um einen Sendelichtstrahl in eine Detektionszone zu einem dort gegebenenfalls befindlichen, zu detektierenden Objekt auszusenden. Das Sendelicht kann von einem solchen Objekt remittiert, d.h. diffus oder spiegelnd reflektiert, und von einem Lichtempfänger detektiert werden, der zusammen mit einer Empfangsoptik eine Empfangseinheit bildet. Der Lichtempfänger besteht bei bekannten Lösungen aus wenigstens einer Zeile von fotosensitiven Empfangselementen.

In Abhängigkeit von der Entfernung zwischen dem Triangulationslichttaster und dem remittierenden Objekt ändert sich die Position eines durch das remittierte Licht erzeugten Lichtflecks auf dem Lichtempfänger in der sogenannten Triangulationsrichtung. Zwischen dem Auftreffpunkt auf dem Lichtempfänger und der Entfernung des erfassten Objekts besteht ein eindeutiger geometrischer Zusammenhang. Durch Auswertung der Lichtverteilung auf dem Lichtempfänger kann damit die Entfernung zwischen Objekt und Lichttaster bestimmt werden. Um insbesondere eine hohe Genauigkeit bei der Entfernungsbestimmung zu erreichen, muss ein solcher Lichtempfänger eine Vielzahl fotosensitiver Empfangselemente aufweisen, die in der Triangulationsrichtung nebeneinander angeordnet sind.

Weiterhin kann bei entsprechender Auswertung der Lichtverteilung auf dem Lichtempfänger bestimmt werden, ob sich ein Objekt innerhalb oder außerhalb eines Tastbereichs befindet, d.h. ob die Entfernung des Objekts innerhalb oder außerhalb einer vorbestimmten, auch als Tastweite bezeichneten Grenze liegt.

Bei Triangulationslichttastern mit Hintergrundausblendung umfasst der Lichtempfänger wenigstens zwei Empfangselemente, wobei ein sogenanntes Nahelement derart angeordnet ist, dass es von einem Lichtstrahl getroffen wird, wenn er von einem Objekt remittiert wird, das sich innerhalb eines Nahbereichs vor dem Triangulationslichttaster befindet, und ein sogenanntes Fernelement derart angeordnet ist, dass es von einem Lichtstrahl getroffen wird, der von einem Objekt reflektiert wird, das sich in einem Fernbereich vor dem Triangulationslichttaster befindet. Der Fernbereich ist dabei definitionsgemäß weiter von dem Triangulationslichttaster entfernt als der Nahbereich. Zur Signalauswertung kann eine Differenz zwischen den Fotodiodenströmen der Empfangselemente dieser beiden Bereiche gebildet werden.

Um Objekte, die sich auf einer Förderstrecke, beispielsweise einem Förderband, befinden, zuverlässig detektieren zu können, wird eine Tastweite oder ein Abstandsschwellenwert definiert, wobei die zu detektierenden Objekte in Abhängigkeit von ihrer Höhe, d.h. ihrem Abstand einer vom Sendelicht erfassten Objektoberfläche von der Förderstrecke, dem Nahbereich zugeordnet werden, während die Förderstrecke selbst dem Fernbereich zugeordnet wird. Die Fläche, welche die Förderstrecke definiert, wird auch als Hintergrund bezeichnet.

Die Tastweite oder der Abstandsschwellenwert bestimmen somit den Schaltpunkt des Triangulationslichttasters, welcher darüber entscheidet, ob ein Objekterfassungssignal erzeugt oder nicht erzeugt wird. Die effektive Abstandsauflösung des Triangulationslichttasters muss höher sein als die Höhe der zu detektierenden Objekte.

Wenn sich der Abstand zwischen dem Triangulationslichttaster und dem Hintergrund, d.h. der Förderstrecke, in einer Größenordnung ändert, die der Höhe der zu detektierenden Objekte entspricht, für welche der Triangulationslichttaster eingerichtet ist, kann es zu Fehlfunktionen bei der Objektdetektion kommen, die sich sowohl in falsch-positiven als auch in falsch-negativen Objekterfassungssignalen äußern können.

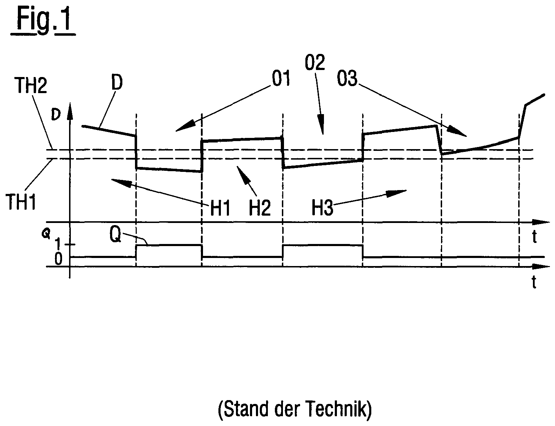

Diese Problematik wird mit Bezug auf Fig. 1 erläutert. Im oberen Teil der Grafik ist der zeitliche Verlauf des Abstands D des Auftreffpunkts des Sendelichts auf einem zu detektierenden Objekt oder der Förderstrecke dargestellt. Die Tastweite wird in Fig. 1 durch zwei Abstandsschwellenwerte TH1, TH2 definiert. Im unteren Teil von Fig. 1 ist das zugehörige Objekterfassungssignal Q in Form von Logikwerten dargestellt, wobei bei einem Zustand 0 kein Objekterfassungssignal Q erzeugt wird und bei einem Wert 1 ein Objekterfassungssignal Q erzeugt wird. Der Zustand des Objekterfassungssignals Q wechselt von 0 auf 1, wenn der Abstand D den Abstandsschwellenwert TH1 unterschreitet und wechselt von 1 auf 0, wenn der Abstand D den Abstandsschwellenwert TH2 überschreitet. Der Abstand zwischen den Abstandsschwellenwerten TH1 und TH2 definiert somit eine Schalthysterese. Die Zeiträume, in denen sich ein Objekt in der Detektionszone des Triangulationslichttasters befindet, werden als Objektbereiche O1 bis O3 bezeichnet. Die Zeiträume, in denen sich kein Objekt in der Detektionszone befindet und somit lediglich der Hintergrund von dem Triangulationslichttaster erfasst wird, werden als Hintergrundbereiche H1 bis H3 bezeichnet. Die Objektbereiche O1 bis O3 und die Hintergrundbereiche H1 bis H3 sind durch senkrechte gestrichelte Linien voneinander getrennt.

In Fig. 1 ist gut zu erkennen, dass in den Objektbereichen O1 und O2 sowie in den Hintergrundbereichen H1 bis H3 eine korrekte Erzeugung des Objekterfassungssignals Q erfolgt. Im Objektbereich O3 unterschreitet jedoch der ermittelte Abstandswert D nicht mehr den Abstandsschwellenwert TH1, was dazu führt, dass fälschlicherweise kein Objekterfassungssignal Q mehr erzeugt wird, d.h. das Objekterfassungssignal Q behält seinen Logikwert 0.

Im vorliegenden Text werden die Begriffspaare Objekterfassungssignal vorhanden/nicht vorhanden einerseits und Objekterfassungssignal gleich 1/gleich 0 andererseits synonym verwendet.

Insbesondere bei der Erfassung von flachen Objekten mit geringer Höhe muss der Abstandsschwellenwert sehr nahe an den Abstand des Hintergrundes von Lichttaster gelegt werden. Wenn nun das Maß, um welches sich der Abstand zwischen dem Lichttaster und dem Hintergrund beispielsweise aufgrund von mechanischen Schwankungen der Förderstrecke ändert, größer ist als die Höhe der zu detektierenden Objekte, ist eine sichere Objekterkennung nicht mehr gewährleistet.

In der DE 100 59 156 A1 ist ein Triangulationssensor beschrieben, der einen Zusatzkanal aufweist, bei dem zur Bestimmung des Objektabstandes der Mess- und der Zusatzkanal gemeinsam ausgewertet werden, um die Zuverlässigkeit zu erhöhen.

In der DE 199 62 701 A1 werden Verfahren beschrieben, mit welchen die Position eines Lichtflecks hochaufgelöst ermittelt werden kann.

Weitere Triangulationstaster sind aus DE 101 38 609 A1 und DE 20 2014 103 068 U1 bekannt.

Es ist die Aufgabe der Erfindung, einen Triangulationslichttaster der eingangs genannten Art anzugeben, der eine verbesserte Detektionssicherheit aufweist.

Die Lösung der Aufgabe erfolgt durch einen Triangulationslichttaster mit den Merkmalen des Anspruchs 1. Erfindungsgemäß ist die Auswerteeinheit dazu ausgelegt, den bisherigen Abstandsschwellenwert zyklisch durch einen neuen Abstandsschwellenwert zu ersetzen, wobei der neue Abstandsschwellenwert durch einen aktuell ermittelten Abstandswert abzüglich eines vorgegebenen ersten Hysteresenwerts bestimmt ist, wenn der aktuell ermittelte Abstandswert größer ist als der bisherige Abstandsschwellenwert, und/oder der neue Abstandsschwellenwert durch den aktuell ermittelten Abstandswert zuzüglich eines vorgegebenen zweiten Hysteresenwerts bestimmt ist, wenn der aktuell ermittelte Abstandswert kleiner ist als der bisherige Abstandsschwellenwert.

Somit ist der Abstandsschwellenwert nicht statisch, sondern kann dynamisch an etwaige Höhenschwankungen der Förderstrecke angepasst werden. Wenn beispielsweise festgestellt wird, dass sich die Förderstrecke vom Lichttaster entfernt und sich somit der ermittelte Abstandswert erhöht, wird der Abstandsschwellenwert grundsätzlich ebenfalls erhöht. Die Bedingung, wonach der aktuell ermittelte Abstandswert größer sein soll als der bisherige Abstandsschwellenwert, entspricht dem Fall, dass die Förderstrecke oder allgemein ein Hintergrund abgetastet wird und die Bedingung, wonach der aktuell ermittelte Abstandswert kleiner sein soll als der bisherige Abtastschwellenwert, entspricht einer Abtastung eines Objekts. Grundsätzlich kann eine Anpassung des Abstandsschwellenwerts in beiden genannten Fällen erfolgen, wobei es jedoch auch möglich ist, die Anpassung nur bei einer Abtastung des Hintergrundes oder nur bei einer Abtastung eines Objekts vorzunehmen. Am sinnvollsten hat sich jedoch eine Anpassung des Abstandswerts sowohl anhand des Hintergrundes auch als anhand des Objekts erwiesen, da dadurch eine kontinuierliche Anpassung gewährleistet wird und vermieden wird, dass aufgrund einer zu langen Pause zwischen zwei Anpassungen eine relevante Änderung der Höhenlage des Hintergrunds nicht erfasst wird.

Wie bereits erwähnt, handelt es sich bei dem Abstandsschwellenwert um einen Schwellenwert für den Abstand, d.h. eine Schaltschwelle für ein Abstandssignal, deren Über- bzw. Unterschreiten zu einem Erzeugen oder Abschalten des Objekterfassungssignals führt.

Unter der zyklischen Ersetzung des Abstandsschwellenwerts wird eine Ersetzung zu bestimmten Zeitpunkten verstanden, wobei die Zeit zwischen zwei Anpassungen fest vorgegeben oder auch variabel sein kann. Im letzteren Fall kann diese auch von zusätzlichen Bedingungen, beispielsweise einer Fördergeschwindigkeit der Förderstrecke abhängig sein.

Bei dem genannten Abstandswert muss es sich nicht zwingend um einen absoluten Wert in einer Längeneinheit handeln, sondern der Abstandswert kann auch allgemein ein Abstandssignal sein, welches mit dem Abstand in einem eindeutigen, jedoch nicht zwingend linearen Zusammenhang steht. Der Abstandswert kann beispielsweise durch eine Spannung, eine Ladung, eine Stromstärke oder eine Position auf dem Lichtempfänger repräsentiert werden. Entsprechendes gilt sinngemäß auch für den Abstandsschwellenwert.

Um zu berücksichtigen, dass der Lichtfleck eine gewisse räumliche Ausdehnung hat, kann eine Position des Lichtflecks auf den Lichtempfänger beispielsweise durch seinen Schwerpunkt oder seinen Median definiert sein.

Vorteilhafterweise sind der erste und der zweite Hysteresenwert gleich. Die genannten Hysteresenwerte definieren den Unterschied zwischen dem aktuellen Abstandswert und dem Abstandsschwellenwert und können fest oder einstellbar sein, um beispielsweise eine Anpassung des Triangulationslichttasters an eine typische Objekthöhe vornehmen zu können. Grundsätzlich ist es jedoch auch möglich, unterschiedliche erste und zweite Hysteresenwerte zu verwenden.

Gemäß einer vorteilhaften Ausführungsform wird der aus dem Abstandswert und einem der Hysteresenwerte bestimmte neue Abstandsschwellenwert vor dem Ersetzen des bisherigen Abstandsschwellenwerts derart modifiziert, dass eine Änderung des neuen Abstandsschwellenwerts im Vergleich zu dem bisherigen Abstandsschwellenwert ein vorgegebenes Maß nicht überschreitet. Hierdurch können beispielsweise zu starke Sprünge bei der Anpassung des Abstandsschwellenwerts vermieden werden. Somit stellt die Modifizierung insbesondere eine Art Tiefpassfilterung dar. Beispielsweise kann eine maximal zulässige Änderung des Abstandsschwellenwerts auf der Grundlage einer absoluten Änderung, d.h. einer Differenz zwischen dem alten und dem neuen Schwellenwert, oder auf der Grundlage einer relativen Änderung, d.h. einer Änderungsrate, definiert werden.

Es hat sich als vorteilhaft erwiesen, wenn der Lichtsensor zumindest zwei Lichtquellen zum Aussenden von jeweiligen Sendelichtstrahlen umfasst, wobei die Lichtquellen derart angeordnet sind, dass die Sendelichtstrahlen an lateral voneinander beabstandeten Auftreffpunkten auf ein zu detektierendes Objekt oder die Förderstrecke treffen, wobei die Auswerteeinheit dazu ausgelegt ist, für jeden Sendelichtstrahl einen jeweiligen Abstandswert zu ermitteln, und wobei das Ersetzen des Abstandsschwellenwerts nur dann erfolgt, wenn die Differenz der für die voneinander beabstandeten Auftreffpunkte ermittelten jeweiligen Abtastwerte kleiner ist als ein vorgegebener Differenzschwellenwert. Durch eine solche Doppel- oder Mehrfachabtastung kann die Zuverlässigkeit bei der Anpassung des Abstandsschwellenwerts deutlich verbessert werden, da eine Anpassung des Abstandsschwellenwerts nur dann erfolgt, wenn an beiden Auftreffpunkten oder Abtastpositionen der gleiche Abstand bzw. die gleiche Objekthöhe ermittelt wurde. So lassen sich Fehlanpassungen des Abstandsschwellenwerts vermeiden, wie sie beispielsweise dann auftreten können, wenn gerade eine Objektkante abgetastet wird und aufgrund dessen ein Abstandswert ermittelt wird, der zwischen der tatsächlichen Objekthöhe und dem Abstand zum Hintergrund liegt. Dies könnte insbesondere dann kritisch sein, wenn die Förderstrecke stillsteht und gerade in diesem Moment eine mehrfache Abtastung und Anpassung des Abstandsschwellenwerts erfolgen würde.

Weiterhin kann durch eine derartige Doppel- oder Mehrfachabtastung vermieden werden, dass eine geneigt zur Förderrichtung verlaufende Objektoberfläche als vermeintliche Höhenänderung der Förderstrecke interpretiert wird.

Der Abstandsschwellenwert und/oder der Abstandswert, auf dessen Grundlage das Objekterfassungssignal erzeugt wird, kann entweder auf der Grundlage eines der zumindest zwei Abstandswerte ermittelt werden, d.h. für den Sendelichtstrahl einer bestimmten der zumindest zwei Lichtquellen, oder auf der Grundlage mehrerer Abstandswerte, z.B. durch Mittelung, ermittelt werden.

Das Merkmal, wonach die Sendelichtstrahlen an lateral voneinander beabstandeten Auftreffpunkten auf ein zu detektierendes Objekt oder die Förderstrecke treffen, bezieht sich insbesondere darauf, dass diese Auftreffpunkte in einer gedachten Referenzebene liegen, sodass diese Auftreffpunkte zumindest für einen vorgegebenen Abstand vom Lichttaster lateral beabstandet sind. Wenn nämlich die Sendelichtstrahlen nicht senkrecht auf ein Objekt oder die Förderstrecke treffen, könnten die Abstände zwischen beiden Auftreffpunkten, in Projektion betrachtet, davon abhängig sein, ob sich der Auftreffpunkt eines jeweiligen Sendelichtstrahls auf einem Objekt oder der Förderstrecke befindet.

Die zumindest zwei Lichtquellen können in einer Reihe oder auch - bei mehr als zwei Lichtquellen in Form eines zweidimensionalen Arrays angeordnet sein, z.B. in Form eines L bei drei Lichtquellen oder in Form eines Rechtecks oder Quadrats bei vier Lichtquellen. Die Auftreffpunkte weisen dann eine entsprechende, ggf. durch die Sendeoptik vergrößerte Anordnung auf, d.h. sie sind in der vorstehend erwähnten gedachten Referenzebene ebenfalls in einer Reihe bzw. als zweidimensionales Array angeordnet.

Je kleiner der Abstand von zueinander benachbarten Lichtquellen und damit der Abstand der Auftreffpunkte ist, desto schneller kann der Lichttaster auf Änderungen in der Höhenlage des Hintergrundes reagieren, um auch höherfrequente Schwingungen des Transportbandes auszugleichen. Beispielsweise ist der Abstand der Lichtquellen kleiner als 1 mm, vorzugsweise kleiner als 200 $\mu$m. Dadurch können auch relativ kompakte und platzsparende Lichtempfänger eingesetzt werden.

Vorteilhafterweise sind die Lichtquellen auf einem einzigen Träger, insbesondere einem einzigen Halbleitersubstrat integriert. Ein Beispiel hierfür sind sogenannte Multipixel-LEDs. So lassen sich die gewünschten geringen Lichtquellenabstände mit hoher Präzision verwirklichen.

Das Merkmal, wonach das Ersetzen des Abstandsschwellenwerts nur dann erfolgt, wenn die Differenz der für die voneinander beabstandeten Auftreffpunkte ermittelten jeweiligen Abtastwerte kleiner ist als ein vorgegebener Differenzschwellenwert, umfasst ausdrücklich auch den Fall, dass bei drei oder mehr Lichtquellen und der entsprechenden Anzahl an ermittelten Abstandswerten als Minuend und/oder Subtrahend bei der Differenzbildung anstelle eines einzelnen Abtastwerts ein Mittelwert aus zwei Abtastwerten verwendet wird.

Vorteilhafterweise erfolgt das Ersetzen des Abstandsschwellenwerts ferner nur dann, wenn die Differenz der für die voneinander beabstandeten Auftreffpunkte ermittelten jeweiligen Abstandswerte für eine vorbestimmte Zeitdauer kleiner ist als der vorgegebene Differenzschwellenwert. Somit muss die Bedingung für eine Abstandsschwellenwertanpassung, wonach die Abstandswerte möglichst nahe beieinanderliegen müssen, nicht nur für einen bestimmten Betrachtungszeitpunkt erfüllt sein, sondern gegebenenfalls auch für eine bestimmte Zeitperiode, sodass die Gefahr von Fehlanpassungen des Abstandsschwellenwerts noch weiter vermindert werden kann.

Vorteilhafterweise erfolgt das Ersetzen des Abstandsschwellenwerts derart, dass für eine vorgegebene Anzahl von Zyklen jeweilige momentane Abstandsschwellenwerte ermittelt werden und der neue Abstandsschwellenwert auf der Grundlage eines Mittelungsverfahrens aus den momentanen Abstandsschwellenwerten ermittelt wird. Dadurch kann eine zu starke Fluktuation des Abstandsschwellenwerts, die beispielsweise auf statistische Messwertschwankungen zurückzuführen sein kann, vermieden werden. Als Mittelungsverfahren kann beispielsweise eine gewichtete oder ungewichtete Mittelwertbildung oder ein Ausgleichsverfahren, insbesondere eine Ermittlung einer Ausgleichsgeraden, eingesetzt werden. Während die Mittelwertbildung eine stärkere Rauschreduktion bewirkt, führt die Ausgleichsgeradenbildung zu einer schnelleren Anpassung an Änderungen der Höhenlage des Hintergrunds. Das Mittelungsverfahren kann rollierend sein, d.h. nach jedem Zyklus wird der älteste momentane Abstandsschwellenwert durch den neuesten momentanen Abstandsschwellenwert ersetzt.

Es hat sich als vorteilhaft erwiesen, wenn die Auftreffpunkte zumindest entlang einer Förderrichtung der Förderstrecke voneinander beabstandet sind. Es erfolgt also eine Art Kantendetektion in der Förderrichtung. Zusätzlich können eine oder mehrere weitere Lichtquellen auch so angeordnet werden, dass weitere Auftreffpunkte abgetastet werden, die quer zu der Förderrichtung voneinander beabstandet sind.

Gemäß einer weiteren vorteilhaften Ausführungsform sind die Lichtquellen derart angeordnet, dass die von den jeweiligen Sendelichtstrahlen auf dem Lichtempfänger erzeugten Lichtflecke für gleiche Abstände der jeweiligen Auftreffpunkte voneinander beabstandet sind, insbesondere in der Triangulationsrichtung. Dadurch wird gewährleistet, dass die jeweiligen Lichtflecke zuverlässig voneinander getrennt werden können. Alternativ ist es auch möglich, dass die Lichtflecke quer zur Triangulationsrichtung voneinander beabstandet sind. In dem Fall könnte beispielsweise eine Erfassung der Lichtflecke durch einen mehrzeiligen Lichtempfänger mit getrennten Empfangsbereichen für die jeweiligen Lichtflecken oder auch durch mehrere Lichtempfänger erfolgen.

Gemäß einer weiteren vorteilhaften Ausführungsform sind die Lichtquellen zeitlich versetzt getaktet aktivierbar, so dass zu einem gegebenen Zeitpunkt nur eine der Lichtquellen oder zumindest nur ein Teil der Lichtquellen Sendelicht aussendet. Dadurch ist es möglich, für jeden Auftreffpunkt separat eine eindeutige Abstandsbestimmung durchzuführen. Eine Überlagerung von durch verschiedene Lichtquellen erzeugte Lichtflecke wird dadurch vermieden. Die Auswertung der Empfangssignale erfolgt entsprechend getaktet, d.h. die Empfangssignale werden der jeweils aktiven Lichtquelle zugeordnet. Die Frequenz der Taktung kann im Wesentlichen beliebig gewählt werden. Beispielsweise kann alle 80 $\mu$s ein jeweiliger Sendelichtpuls durch eine der Lichtquellen ausgesendet werden.

Grundsätzlich können die Lichtquellen jedoch auch gleichzeitig, insbesondere dauernd aktivierbar sein, wenn eine Differenzierung der zwei oder mehreren Lichtflecken durch den Lichtempfänger oder die Auswerteeinheit möglich ist. Sofern der Lichtempfänger mehrere Zeilen aufweist, denen jeweils mehrere Lichtquellen zugeordnet sind, können auch Lichtquellen, die verschiedenen Zeilen zugeordnet sind, gleichzeitig aktiviert sein, um eine parallele Detektion von mehreren Lichtflecken zu ermöglichen. Mit anderen Worten ist hier jeweils nur eine Lichtquelle pro Zeile aktiv.

Vorteilhafterweise verläuft die Triangulationsrichtung parallel zu der Förderrichtung. Wenn zusätzlich die Lichtquellen derart angeordnet sind, dass die von den jeweiligen Sendelichtstrahlen auf dem Lichtempfänger erzeugten Lichtflecke für gleiche Abstände der jeweiligen Auftreffpunkte in der Triangulationsrichtung voneinander beabstandet sind, können gegebenenfalls die zwei oder mehreren Abstandswerte gleichzeitig, d.h. während eines einzigen Messdurchgangs bestimmt werden.

Weitere vorteilhafte Ausführungsformen ergeben sich aus den Unteransprüchen, der Beschreibung und den Zeichnungen.

Die Erfindung wird nachfolgend beispielhaft anhand der Zeichnungen beschrieben. Es zeigen:

Fig. 1 ein schematisches Diagramm, welches den zeitlichen Verlauf eines Abstandswerts und eines zugehörigen Objekterfassungssignals, welches durch einen Triangulationslichttaster gemäß dem Stand der Technik erzeugt wurde;

Fig. 2 eine schematische Seitenansicht eines oberhalb einer Förderstrecke angeordneten Triangulationslichttasters gemäß einem ersten Ausführungsbeispiel;

Fig. 3 eine schematische Draufsicht des Triangulationslichttasters von Fig. 2;

Fig. 4 eine schematische Draufsicht eines Triangulationslichttasters gemäß einem zweiten Ausführungsbeispiel;

Fig. 5 ein schematisches Diagramm, welches verschiedene zeitliche Signalverläufe für einen Triangulationslichttaster gemäß der vorliegenden Erfindung repräsentiert;

Fig. 6 eine schematische Draufsicht eines Triangulationslichttasters gemäß einem dritten Ausführungsbeispiel; und

Fig. 7 eine schematische Draufsicht eines Triangulationslichttasters gemäß einem vierten Ausführungsbeispiel.

In den Figuren sind gleiche oder gleichartige Komponenten mit gleichen Bezugszeichen beziffert.

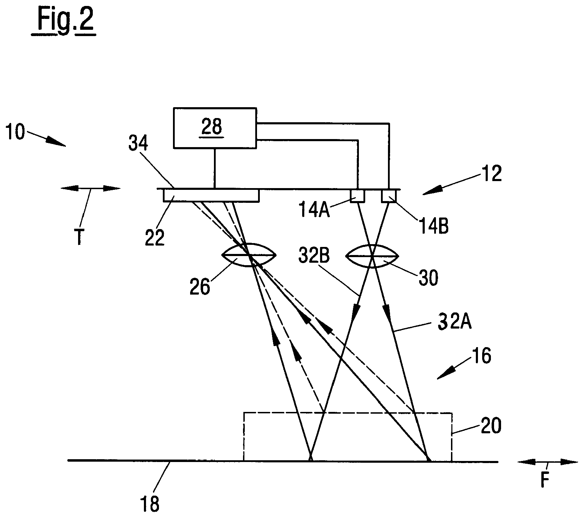

Fig. 2 zeigt ein erstes Ausführungsbeispiel eines Triangulationslichttasters 10, welcher oberhalb einer Förderstrecke 18 angeordnet ist. Auf der Förderstrecke 18 können Objekte 20 in einer durch einen Doppelpfeil angegebenen Förderrichtung F befördert werden.

Der Triangulationslichttaster 10 umfasst einen Lichtsender 12, welcher im Ausführungsbeispiel zwei Lichtquellen 14A, 14B umfasst. Gemäß Abwandlungen können auch weniger oder mehr Lichtquellen vorgesehen sein.

Das von den Lichtquellen 14A, 14B emittierte Sendelicht wird mit Hilfe einer gemeinsamen Sendeoptik 30 in Form von jeweiligen Sendelichtstrahlen 32A, 32B in Richtung einer Detektionszone 16 gelenkt, wo es entweder auf ein Objekt 20 oder die Förderstrecke 18 trifft. Die Objekte 20 bilden hierbei den Vordergrund, während die Förderstrecke 18 den Hintergrund bildet. Anstelle einer gemeinsamen Sendeoptik 30 können auch für jede Lichtquelle 14A, 14B separate Sendeoptiken vorgesehen sein.

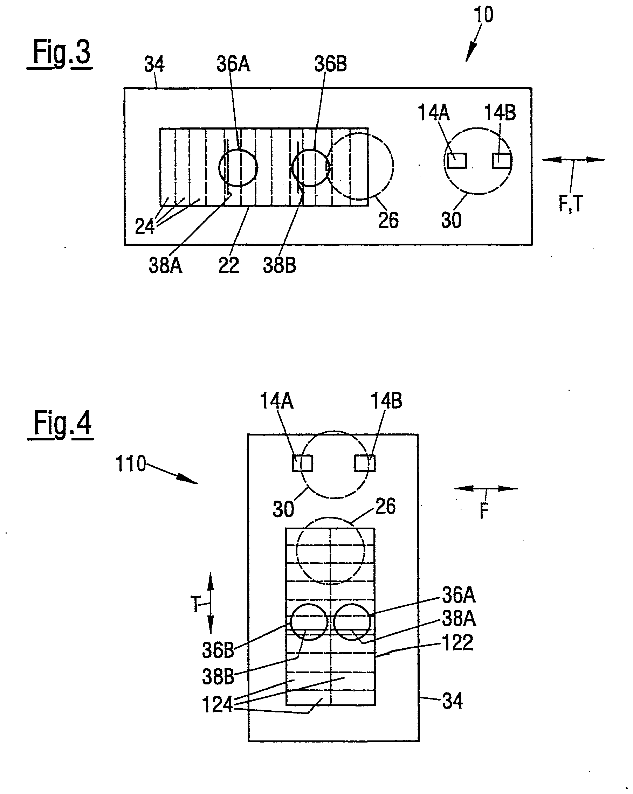

Das auftreffende Sendelicht wird von einem Objekt 20 bzw. der Förderstrecke 18 in Richtung des Triangulationslichttasters 10 remittiert und mit Hilfe einer gemeinsamen Empfangsoptik 26 auf einen Lichtempfänger 22 des Triangulationslichttasters 10 zu jeweiligen Lichtflecken 36A, 36B fokussiert, wobei der Lichtempfänger 22 ein zeilenförmiges Array von fotosensitiven Empfangselementen 24 umfasst (Fig. 3). Der Lichtempfänger 22 kann zum Beispiel 128 Empfangselemente 24 mit einer Breite von 800 $\mu$m und einer Länge (in Zeilenrichtung) von 35 $\mu$m aufweisen. Das Objekt 20 sowie die Empfangslichtstrahlen, die beim Auftreffen auf das Objekt 20 remittiert wurden, sind der besseren Übersichtlichkeit halber gestrichelt dargestellt. Die Position eines jeweiligen Lichtflecks 36A, 36B auf dem Lichtempfänger 22 in einer Triangulationsrichtung T hängt von dem Abstand zwischen dem Triangulationslichttaster 10 und einem Auftreffpunkt eines jeweiligen Sendelichtstrahls 32A, 32B auf einem Objekt 20 oder der Förderstrecke 18 ab.

Der Lichtempfänger 22 und die Lichtquellen 14A, 14B können auf einer gemeinsamen Leiterplatte 34 angeordnet sein.

Der Lichtempfänger 22 ist mit einer Auswerteeinheit 28 verbunden, welche die Empfangssignale der Empfangselemente 24 auswertet, um jeweilige Abstandswerte D zu ermitteln und gegebenenfalls ein Objekterfassungssignal Q zu erzeugen.

Die Auswerteeinheit 28 kann zusätzlich mit den Lichtquellen 14A, 14B verbunden sein, um diese insbesondere getaktet anzusteuern.

Fig. 3 zeigt den Triangulationslichttaster 10 von Fig. 2 in Draufsicht. In dieser Darstellung sind die Sendeoptik 30 und die Empfangsoptik 26 als gestrichelte Kreise dargestellt.

Der Lichtempfänger 22 erfasst zwei Lichtflecke 36A, 36B, wobei der Lichtfleck 36A der Lichtquelle 14A und der Lichtfleck 36B der Lichtquelle 14B zugeordnet ist. Der Übersichtlichkeit halber sind hier nur diejenigen Lichtflecke 36A, 36B dargestellt, die durch eine Remission der Förderstrecke 18 erzeugt wurden. Wenn die Sendeoptik 30 und die Empfangsoptik 26 ähnliche Brennweiten aufweisen, entspricht für identische Entfernungen zwischen den Auftreffpunkten und dem Lichttaster 10 der Abstand der Lichtflecke 36A, 36B voneinander dem Abstand der Lichtquellen 14A, 14B voneinander.

Ferner sind in Fig. 3 zwei virtuelle Trennstege 38A, 38B dargestellt, welche mit einem Abstandsschwellenwert korrespondieren. Wenn einer der Sendelichtstrahlen 32A, 32B anstatt auf die Förderstrecke 18 auf ein zu detektierendes Objekt 20 trifft, wandert der korrespondierende Lichtfleck 36A bzw. 36B nach links auf die andere Seite des jeweiligen virtuellen Trennstegs 38A bzw. 38B.

Zur Ermittlung von Abstandswerten aus den Lichtfleckpositionen können grundsätzlich verschiedene Verfahren eingesetzt werden.

Für eine Ermittlung von Abstandswerten in Anlehnung an ein in DE 199 66 701 A1 beschriebenes Verfahren kann die Auswerteeinheit 28 einen Multiplexer umfassen, mit denen die Empfangselemente 24 mit einem von drei Eingangskanälen CH1 bis CH3 verbunden werden kann. Beispielsweise können diejenigen Empfangselemente 24, die rechts des Trennstegs 38A liegen mit dem Eingangskanal CH1 verbunden werden, welcher auch als Fernkanal bezeichnet werden kann, da er im Wesentlichen diejenigen Empfangselemente 24 umfasst, welche Licht von der Förderstrecke 18 empfangen. Die links des Trennstegs 38A liegenden Empfangselemente 24 werden dann mit dem Eingangskanal CH3 verbunden, welcher in entsprechender Weise als Nahkanal bezeichnet werden kann, da er im Wesentlichen diejenigen Lichtstrahlen empfängt, die von einem Objekt 20 remittiert werden. Der Eingangskanal CH2 ist lediglich mit demjenigen Empfangselement 24 verbunden, auf welchem der virtuelle Trennsteg 38A liegt. Ein Abstandswert D kann allgemein gemäß der folgenden Gleichung berechnet werden:

$$D = (CH1 + a \times CH2 - CH3) / (CH1 + CH2 + CH3),$$

wobei a ein Faktor mit einem Wert zwischen 0 und 1 ist, welcher eine "Feinjustage" des virtuellen Trennstegs 38A mit Subpixelgenauigkeit ermöglicht. Grundsätzlich müssen die Eingangskanäle CH1 und CH3 nur mit so vielen Empfangselementen 24 verbunden werden, dass der gesamte Lichtfleck 36A erfasst werden kann. Auf der Grundlage der Position des Lichtflecks 36A wird ein erster Abstandswert D1 ermittelt.

Die Position des von der anderen Lichtquelle 14B erzeugten Lichtflecks 36B wird in entsprechender Weise ausgewertet. Hierzu wird die Konfiguration des Multiplexers geändert, so dass sich die Zuordnung der Empfangselemente 24 zu den Eingangskanälen CH1 bis CH3 an der Position des Trennstegs 38B orientiert. Die Berechnung eines entsprechenden Abstandswerts D2 erfolgt entsprechend.

Das Umschalten der Konfiguration des Multiplexers erfolgt synchron mit einer Ansteuerung der Lichtquellen 14A bzw. 14B derart, dass beispielsweise eine erste Konfiguration des Multiplexers, welche sich an dem Trennsteg 38A orientiert, synchron mit einer Aktivierung der Lichtquelle 14A erfolgt, während eine zweite Konfiguration des Multiplexers, die sich an dem Trennsteg 38B orientiert, synchron mit einer Aktivierung der Lichtquelle 14B erfolgt. Somit ist immer nur eine der Lichtquellen 14A, 14B aktiv, so dass tatsächlich nur einer der Lichtflecke 36A, 36B auf den Lichtempfänger 22 auftrifft.

Dadurch können voneinander getrennt für jeden der lateral voneinander beabstandeten Auftreffpunkte ein jeweiliger Abstandswert D1 bzw. D2 ermittelt werden. Die Taktlänge, d.h. der Zeitraum zwischen zwei Umschaltungen kann beispielsweise 80 μs betragen, wobei hier auch kürzere oder längere Zeiträume zur Anwendung gelangen können.

Anstelle der vorstehend beschriebenen Positionsermittlung der Lichtflecke 36A, 36B können auch andere Auswerteverfahren angewendet werden. Beispielsweise können die Empfangselemente 24 einzeln seriell oder parallel ausgelesen werden, um eine Intensitätsverteilung oder eine Art Spektrum zu ermitteln und einer geeigneten Datenverarbeitung zu unterziehen. Weiterhin kann die Positionsermittlung auch auf der Grundlage einer Berechnung des Schwerpunkts, des Medians oder des Intensitäts- bzw. Energiemaximums der Lichtflecke 36A, 36B erfolgen.

Lichttaster 10 gemäß Fig. 2 werden aus Platzgründen vorteilhafterweise bei der Überwachung von Förderstrecken eingesetzt, die nach dem Prinzip der Gassenförderung mehrere Objekte parallel in Gassen fördern, welche unabhängig voneinander von jeweils zugeordneten, quer zur Förderrichtung beabstandeten Lichttastern 10 überwacht werden.

Fig. 4 zeigt einen Triangulationslichttaster 110 gemäß einem zweiten Ausführungsbeispiel, welcher in ähnlicher Weise wie der Lichttaster 10 (Fig. 2) oberhalb der Förderstrecke 18 angeordnet werden kann. Im Unterschied zum Ausführungsbeispiel von Fig. 3 und 4 kommt hier ein zweizeiliger Lichtempfänger 122 zum Einsatz, dessen Empfangselemente 124 in zwei in Triangulationsrichtung T verlaufenden Reihen angeordnet sind.

Die Triangulationsrichtung T verläuft hier abweichend vom Ausführungsbeispiel von Fig. 3 und 4 quer zu der Förderrichtung F, während die Lichtquellen 14A, 14B jedoch weiterhin in der Förderrichtung F voneinander beabstandet sind. Es werden wieder zwei jeweilige Lichtflecke 36A, 36B von dem Lichtempfänger 122 empfangen, wobei diese jedoch im Unterschied zu Fig. 3 und 4 nicht in der Triangulationsrichtung T voneinander beabstandet sind, sondern nebeneinanderliegen, so dass jeder Lichtfleck 36A, 36B einer jeweiligen Zeile des Lichtempfängers 122 zugeordnet ist. Durch eine entsprechende Auswertung des Lichtempfängers 122 können die Positionen beider Lichtflecke 36A, 36B simultan oder zumindest quasi simultan, d.h. mit einem minimalen Zeitversatz ermittelt werden. Die Auswertung der von den Empfangselementen 124 erzeugten Empfangssignale erfolgt analog durch eine am jeweiligen Trennsteg 38A, 38B orientierten Zuordnung der Empfangselemente zu einem der Eingangskanäle CH1 bis CH3, wobei für jede Zeile ein separater Multiplexer vorgesehen sein kann, so dass eine Konfigurationsumschaltung nicht erforderlich ist. Entsprechend können die Lichtquellen 14A, 14B im Dauerbetrieb betrieben werden bzw. zumindest simultan getaktet werden.

Gemäß einer Abwandlung kann jedoch auch ein einzeiliger Lichtempfänger (entsprechend dem Ausführungsbeispiel von Fig. 3) sowie ein einzelner Multiplexer zum Einsatz gelangen, wobei dann wieder eine abwechselnde Taktung der Lichtquellen 14A, 14B und eine entsprechende Umschaltung der Multiplexerkonfiguration erforderlich ist.

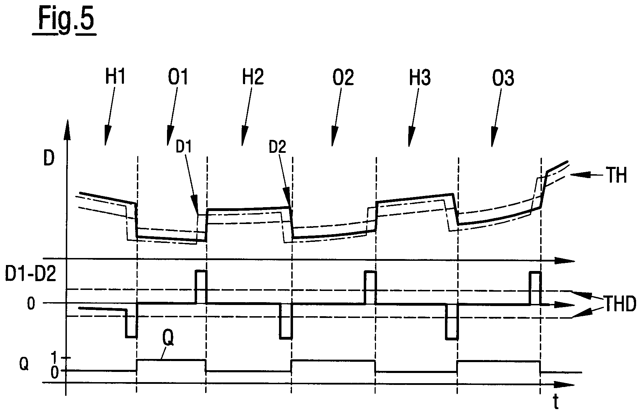

Mit Bezug auf Fig. 5 wird nachfolgend nun die Erzeugung und Auswertung der Abstandswerte D1 und D2 sowie die Erzeugung des Objekterfassungssignals Q beschrieben. Zunächst wird ein anfänglicher Abstandsschwellenwert TH festgelegt, der sich an dem Abstand der Förderstrecke 18 von dem Triangulationslichttaster 10, 110 und der Höhe bzw. einer Mindesthöhe der zu detektierenden Objekte 20 orientiert. Beispielsweise kann ein Mittelwert zwischen dem Abstand zu einem Objekt 20 mit Mindesthöhe und dem Abstand zu der Förderstrecke 18 als anfänglicher Abstandsschwellenwert TH angenommen werden.

Anschließend wird in einem Zyklus zunächst die Lichtquelle 14A aktiviert und die Position des Lichtflecks 36A ausgewertet, um den Abstandswert D1 zu gewinnen. Anschließend wird die Lichtquelle 14B aktiviert und die Position des Lichtflecks 36B ausgewertet, um den Abstandswert D2 zu gewinnen.

Es kann vorteilhafterweise eine Normierung der Abstandswerte D1, D2 erfolgen, so dass diese für eine gleiche Höhenlage der Auftreffpunkte, d.h. bei einem identischen Objekt- bzw. Hintergrundabstand, gleich sind. Dies kann etwa durch Addition oder Subtraktion eines konstanten Offsets geschehen.

Ein beispielhafter zeitlicher Verlauf der Abstandswerte D1, D2 ist im oberen Teil von Fig. 5 wiedergegeben und entspricht dem Verlauf des Abstandswerts D in Fig. 1. Der zeitliche Verlauf des Abstandswerts D1 ist als strichpunktierte Linie dargestellt, während der zeitliche Verlauf des Abstandswerts D2 durch eine durchgezogene Linie wiedergegeben wird. Ähnlich wie in Fig. 1 ist der zeitliche Verlauf der Signale in Fig. 5 in Hintergrundbereiche H1 bis H3 und Objektbereiche O1 bis O3 unterteilt, deren Grenzen in Fig. 5 durch vertikale gestrichelte Linien markiert sind, die sich am Verlauf der Kurve D2 orientieren.

Nach der Ermittlung der Abstandswerte D1, D2 zu einem Zeitpunkt wird der Absolutbetrag der Differenz zwischen D1 und D2 ermittelt und mit einem Differenzschwellenwert THD verglichen. Der zeitliche Verlauf der Differenz zwischen D1 und D2 ist durch die mittlere Kurve von Fig. 5 repräsentiert.

Wenn gilt:

$$abs(D1 - D2) < THD,$$

dann wird ein neuer Abstandsschwellenwert TH' gemäß den folgenden Bedingungen ermittelt:

$$TH' = D2 - H, \text{ wenn } D2 > TH \qquad \text{(Bedingung 1)},$$

$$TH' = D2 + H, \text{ wenn } D2 < TH \qquad \text{(Bedingung 2)},$$

wobei H ein Hysteresenwert ist, der eine möglichst kleine positive Konstante darstellt. Die Bedingung 1 entspricht einer Abtastung des Hintergrunds bzw. der Förderstrecke 18, während die Bedingung 2 einer Abtastung des Vordergrunds bzw. eines Objekts 20 entspricht. Die Bestimmung des Hysteresenwerts H kann sich an der Bestimmung des Anfangswerts für den Abstandsschwellenwert TH orientieren. Der Hysteresenwert H kann fest vorgegeben sein oder aber automatisch an Störungen, die zu Schwankungen der Abstandswerte D1, D2 führen, und/oder an zuletzt erkannte Sprünge der Abstandswerte D1, D2 angepasst werden.

Gegebenenfalls kann noch eine Modifikation des neuen Abstandsschwellenwerts TH' erfolgen, wenn dieser zu stark von dem bisherigen Abstandsschwellenwert TH abweicht. Die Ermittlung des neuen Abstandsschwellenwerts TH' auf der Grundlage des Abstandswerts D2 ist hier nur beispielhaft. So könnte auch der Abstandswert D1 oder ein Mittelwert aus D1 und D2 zugrunde gelegt werden.

In einem nächsten Schritt wird dann der bisherige Abstandsschwellenwert TH durch den neuen Abstandsschwellenwert TH' ersetzt.

Wenn also der Unterschied zwischen D1 und D2 kleiner als der Differenzschwellenwert THD ist, wird davon ausgegangen, dass eine langsame Veränderung des Abstands der Förderstrecke 18 von dem Triangulationslichttaster 10, 110 vorliegt. In dem Fall wird der Abstandsschwellenwert TH kontinuierlich angepasst. Ein entsprechender Verlauf des Abstandsschwellenwerts TH ist im oberen Teil von Fig. 5 als gestrichelte Linie dargestellt.

Wenn jedoch festgestellt wird, dass der Betrag der Differenz zwischen D1 und D2 größer oder gleich dem Differenzschwellenwert THD ist, unterbleibt eine Anpassung des Abstandsschwellenwerts TH. Dies ist der Fall, wenn ein Objekt 20 nur von einem der Sendelichtstrahlen 32A bzw. 32B erfasst wird und der andere Sendelichtstrahl 32B bzw. 32A auf die Förderstrecke 18 trifft. Auch wenn ein Objekt 20 mit stark geneigter Oberfläche zu einem Überschreiten des Differenzschwellenwerts THD führt, unterbleibt eine Anpassung des Abstandsschwellenwerts TH.

In einem nächsten Zyklus werden die vorstehend beschriebenen Schritte dann in entsprechender Weise durchgeführt.

Für die eigentliche Erzeugung des Objekterfassungssignals Q, welche grundsätzlich vor oder nach einer Anpassung des Abstandsschwellenwerts TH erfolgen kann, wird im Ausführungsbeispiel nur der Abstandswert D2 herangezogen. Alternativ könnte auch der Wert D1 oder auch der Mittelwert von D1 und D2 betrachtet werden.

Wie in Fig. 5 gut zu erkennen ist, erfolgt eine Anpassung des Abstandsschwellenwerts TH sowohl in den Hintergrundbereichen H1 bis H3 als auch in den Objektbereichen O1 bis O3, wobei stets ein ausreichender Abstand des Abstandsschwellenwerts TH von den Abstandswerten D1 bzw. D2 gegeben ist, so dass stets eine zuverlässige Generierung des Objekterfassungssignals Q gegeben ist. Dessen Verlauf ist im unteren Teil von Fig. 5 wiedergegeben. Ein Vergleich mit Fig. 1 zeigt, dass auch im bisher kritischen Objektbereich O3, bei dem mit einem Lichttaster gemäß dem Stand der Technik eine Objekterfassung fälschlicherweise unterblieben ist, mit Hilfe des erfindungsgemäßen Triangulationslichttasters 10, 110 stets eine zuverlässige Objekterkennung möglich ist.

Gemäß einer Abwandlung kann eine Anpassung des Abstandsschwellenwerts auch mit einem Triangulationslichttaster erfolgen, welcher nur eine Lichtquelle aufweist und bei dem deshalb eine Differenz von Abstandswerten und damit eine Kantendetektion nicht möglich ist. Die hierdurch fehlende Möglichkeit der Detektion von Objektkanten oder stark geneigten Flächen kann jedoch auf andere Weise kompensiert werden, beispielsweise durch eine Überwachung des zeitlichen Verlaufs des Abstandswerts.

Gemäß weiterer Abwandlungen der Lichttaster 10, 110 können auch Lichttaster mit mehr als zwei Lichtquellen eingesetzt werden.

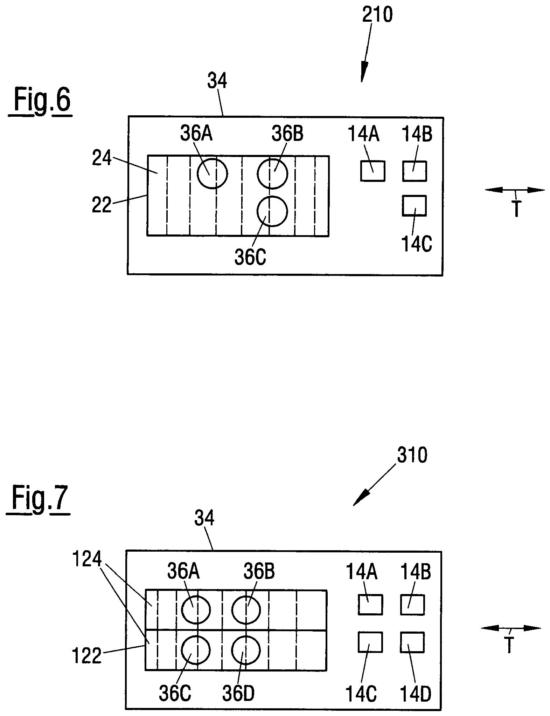

So zeigt Fig. 6 einen Lichttaster 210, welcher drei in Form eines L angeordnete Lichtquellen 14 A bis 14 C sowie einen einzeiligen Lichtempfänger 22 umfasst. Die Abstände zwischen den Lichtquellen 14A und 14B und zwischen den Lichtquellen 14B und 14C sind vorteilhafterweise gleich. In einem Zyklus wird alternativ oder zusätzlich zu der Aktivierung der Lichtquelle 14 A und der Auswertung der Position des Lichtflecks 36 A die Lichtquelle 14C aktiviert und die Position eines durch die die Lichtquelle 14C erzeugten Lichtflecks 36C ausgewertet, um einen Abstandswert D3 zu gewinnen. Der Lichttaster 210 kann mit seiner Triangulationsrichtung T sowohl längs zur Förderrichtung F (entsprechend der Anordnung von Fig. 2 und 3) als auch quer dazu (entsprechend der Anordnung von Fig. 4) ausgerichtet und betrieben werden, wobei je nach Ausrichtung nur die beiden in der Förderrichtung F hintereinanderliegenden Lichtquellen 14A und 14B bzw. 14B und 14C betrieben werden. Die Umschaltung zwischen beiden Betriebsmodi kann automatisch oder manuell erfolgen. Der Vorteil besteht darin, dass für beide Betriebsmodi der gleiche Lichttaster 210 verwendet werden kann.

Anstelle des einzeiligen Lichtempfängers 22 kann gemäß einer Abwandlung auch ein zweizeiliger Lichtempfänger verwendet werden.

Gemäß einer weiteren Abwandlung des Lichttasters 210 können innerhalb eines jeweiligen Zyklus alle drei Lichtquellen 14A bis 14C gleichzeitig bzw. sequenziell hintereinander betrieben werden. Eine Neuberechnung der Schaltschwelle TH' erfolgt in Abwandlung der vorstehend genannten Bedingungen 1 und 2 gemäß den folgenden Bedingungen:

$$TH' = D2 - H,$$

wenn

$$D2 > TH \text{ UND } abs(D1 - D2) < THD \text{ UND } abs(D3 - D2) < THD \text{ (Bedingung 1')},$$

$$TH' = D2 + H,$$

wenn

$$D2 < TH \text{ UND } abs(D1 - D2) < THD \text{ UND } abs(D3 - D2) < THD \text{ (Bedingung 2')},$$

wobei H der bereits vorstehend erläuterte Hysteresenwert ist. Die Bedingung 1' entspricht einer Abtastung des Hintergrunds bzw. der Förderstrecke 18, während die Bedingung 2' einer Abtastung des Vordergrunds bzw. eines Objekts 20 entspricht. Wenn keine der Bedingungen 1' oder 2' erfüllt ist, gilt TH' = TH, d.h. es erfolgt keine Anpassung des Abstandsschwellenwerts TH. Die Ermittlung des neuen Abstandsschwellenwerts TH' auf der Grundlage des Abstandswerts D2 ist hier nur beispielhaft. So könnte auch der Abstandswert D1 oder D3 oder ein Mittelwert aus D1, D2 und/oder D3 zugrunde gelegt werden.

Gemäß einer (nicht dargestellten) weiteren Abwandlung des Lichttasters 10 (Fig. 2) bzw. des Lichttasters 110 (Fig. 4) können anstelle der zwei Lichtquellen 14A, 14B drei in Reihe angeordnete, vorzugsweise sequenziell aktivierbare Lichtquellen vorgesehen sein, wobei die Anpassung des Abstandsschwellenwerts TH entsprechend der vorstehend für den Lichttaster 210 (Fig. 6) beschriebenen Bedingungen 1' und 2' erfolgen kann. Die Festlegung der Reihenfolge der Lichtquellenaktivierung zur Anpassung an die Förderrichtung kann manuell oder automatisch während einer Start- oder Einlernphase auf der Grundlage einer automatischen Erkennung der Förderrichtung erfolgen.

Fig. 7 zeigt einen Lichttaster 310 gemäß einer weiteren Abwandlung, welcher vier in Form eines Rechtecks oder Quadrats angeordnete Lichtquellen 14 A bis 14 D sowie einen zweizeiligen Lichtempfänger 122 zur Erfassung der Lichtflecke 36A bis 36D umfasst. Die Abstände zwischen den Lichtquellen 14A und 14B und zwischen den Lichtquellen 14C und 14D und insbesondere auch die Abstände zwischen den Lichtquellen 14A und 14C und zwischen den Lichtquellen 14B und 14D sind vorteilhafterweise gleich

In einem Zyklus werden zyklisch nacheinander die Lichtquellen 14 A bis 14D aktiviert und durch Auswertung der jeweiligen Positionen der zugeordneten Lichtflecke 36 A bis 36D zugeordnete Abstandswerte D1 bis D4 bestimmt. Es können auch jeweils zwei Lichtquellen gleichzeitig aktiviert werden, z.B. die Lichtquellen 14A und 14C oder die Lichtquellen 14B und 14D. Der Lichttaster 310 kann mit seiner Triangulationsrichtung T sowohl längs zur Förderrichtung F (entsprechend der Anordnung von Fig. 2 und 3) als auch quer dazu (entsprechend der Anordnung von Fig. 4) ausgerichtet und betrieben werden. Eine Umschaltung zwischen beiden Betriebsmodi ist nicht erforderlich. Anstelle des zweizeiligen Lichtempfängers122 kann gemäß einer Abwandlung auch ein einzeiliger Lichtempfänger verwendet werden.

Es werden nun die folgenden gemittelten Abstandswerte ermittelt:

$$D1' = (D1 + D2) / 2 \quad \text{(Lichtquellen 14A und 14B)}$$

$$D2' = (D3 + D4) / 2 \quad \text{(Lichtquellen 14C und 14D)}$$

$$D3' = (D1 + D3) / 2 \quad \text{(Lichtquellen 14A und 14C)}$$

$$D4' = (D2 + D4) / 2 \quad \text{(Lichtquellen 14B und 14D)}$$

Eine Neuberechnung der Schaltschwelle TH' erfolgt in Abwandlung der vorstehend genannten Bedingungen 1' und 2' gemäß den folgenden Bedingungen:

$$TH' = D2 - H,$$

wenn

$$D2 > TH \ \text{UND} \ abs(D1' - D2') < THD \ \text{UND} \ abs(D3' - D4') < THD \ \text{(Bedingung 1'')},$$

$$TH' = D2 + H,$$

wenn

$$D2 < TH \ \text{UND} \ abs(D1' - D2') < THD \ \text{UND} \ abs(D3' - D4') < THD \ \text{(Bedingung 2'')},$$

wobei H der bereits vorstehend erläuterte Hysteresenwert ist. Die Bedingung 1" entspricht einer Abtastung des Hintergrunds bzw. der Förderstrecke 18, während die Bedingung 2" einer Abtastung des Vordergrunds bzw. eines Objekts 20 entspricht. Die Ermittlung des neuen Abstandsschwellenwerts TH' auf der Grundlage des Abstandswerts D2 ist hier nur beispielhaft. So könnten ein oder mehrere Abstandswerte D1 bis D4 oder gemittelte Abstandswerte D1' bis D4' zugrunde gelegt werden.

Gemäß einer weiteren Abwandlung können der Lichttaster 210 (Fig. 6) bzw. der Lichttaster 310 (Fig. 7) dazu eingerichtet sein, in einem über mehrere Zyklen andauernden Einlernmodus mit einer ggf. reduzierten Häufigkeit der Abstandsschwellenwertermittlung ihre Einbaulage, d.h. die Ausrichtung der Triangulationsrichtung T in Bezug auf die Förderrichtung F, zu ermitteln.

Hierfür wird im Einlernmodus für den Lichttaster 210 (Fig. 6) überprüft, welche der Bedingungen

$$abs(D1 - D2) < THD$$

$$abs(D3 - D2) < THD$$

statistisch häufiger erfüllt ist.

Für den Lichttaster 310 (Fig. 7) wird im Einlernmodus überprüft, welche der Bedingungen

$$abs(D1' - D2') < THD$$

$$abs(D3' - D4') < THD$$

statistisch häufiger erfüllt ist.

Dem liegt der Gedanke zugrunde, dass die Sendelichtstrahlen von denjenigen Lichtquellen, die auf einer Geraden quer zur Förderrichtung liegen, in der Regel annähernd synchron zueinander entweder beide auf ein Objekt oder beide auf den Hintergrund treffen. Für das erfindungsgemäße Verfahren der Schwellenwertanpassung sind jedoch vor allem Abstandsdifferenzen in der Förderrichtung von Interesse, die aber im Wesentlichen nur mittels derjenigen Lichtquellen ermittelt werden können, die auf einer längs der Förderrichtung verlaufenden Geraden liegen. Die Bedingung für diejenigen Lichtquellen, die auf einer Geraden quer zur Förderrichtung liegen, wird statistisch weniger häufig erfüllt sein. Diese Bedingung kann in einem nachfolgenden Regelbetrieb ignoriert werden bzw. auf eine Ermittlung der dieser Bedingung zugrundeliegenden Abstandswerte bzw. die Aktivierung der betreffenden Lichtquellen kann verzichtet werden, so dass sich die Zyklusdauer entsprechend verkürzt und die Anpassungsfrequenz des Abstandsschwellenwerts erhöht.

Für die eigentliche Erzeugung des Objekterfassungssignals Q wird auch in den Abwandlungen nur der Abstandswert D2 herangezogen. Alternativ können auch andere Abstandswerte oder auch Mittelwerte aus zwei oder mehr Abstandswerten betrachtet werden.

Bezugszeichenliste

| | |
|---|---|
| 10, 110, 210, 310 | Triangulationslichttaster |
| 12 | Lichtsender |
| 14A - 14D | Lichtquelle |
| 16 | Detektionszone |
| 18 | Förderstrecke |
| 20 | Objekt |
| 22, 122 | Lichtempfänger |
| 24, 124 | Empfangselement |
| 26 | Empfangsoptik |
| 28 | Auswerteeinheit |
| 30 | Sendeoptik |
| 32A, 32B | Sendelichtstrahl |
| 34 | Leiterplatte |
| 36A, 36B | Lichtfleck |
| 38A, 38B | Trennsteg |
| D, D1, D2, D3, D4, D1', D2', D3', D4' | Abstandswert |
| F | Förderrichtung |
| H | Hysteresenwert |
| H1, H2, H3 | Hintergrundbereich |
| O1, O2, O3 | Objektbereich |
| T | Triangulationsrichtung |
| TH, TH', TH1, TH2 | Abstandsschwellenwert |
| THD | Differenzschwellenwert |

**Patentansprüche**

1. Triangulationslichttaster (10, 110. 210, 310) zur Detektion von Objekten (20) auf einer Förderstrecke (18) (18), mit einem Lichtsender (12) zum Aussenden von Sendelicht in eine Detektionszone (16), welche sich über einen Teilbereich der Förderstrecke (18) erstreckt,
einem ein Array von Empfangselementen (24, 124) aufweisenden Lichtempfänger (22, 122) zum Empfangen von Licht, welches aus der Detektionszone (16) von einem zu detektierenden Objekt (20) oder der Förderstrecke (18) remittiert wird, wobei sich das Array von Empfangselementen (24, 124) zumindest in einer Triangulationsrichtung (T) erstreckt, und wobei die Empfangselemente (24, 124) jeweilige Empfangssignale erzeugen,

einer im Strahlengang zwischen Detektionszone (16) und Lichtempfänger (24) angeordneten Empfangsoptik (26) zum Erzeugen zumindest eines Lichtflecks (36A - 36D) aus dem remittierten Licht auf dem Lichtempfänger (22, 122), wobei sich die Position des zumindest einen Lichtflecks (36A-36D) auf dem Lichtempfänger (22, 122) in der Triangulationsrichtung (T) in Abhängigkeit von dem Abstand eines Auftreffpunkts des Sendelichts auf einem zu detektierenden Objekt (20) oder der Förderstrecke (18) von dem Triangulationslichttaster (10, 110. 210, 310) ergibt, und

einer Auswerteeinheit (28), welche zum Erzeugen eines Objekterfassungssignals (Q) aus den Empfangssignalen ausgelegt ist, wobei nur dann ein Objekterfassungssignal (Q) erzeugt wird, wenn ein anhand der Position des zumindest einen Lichtflecks (36A - 36D) auf dem Lichtempfänger (22, 122) ermittelter Abstandswert (D, D1 - D4) des Auftreffpunkts einen vorgegebenen Abstandsschwellenwert (TH) unterschreitet,

**dadurch gekennzeichnet,**

**dass** die Auswerteeinheit (28) dazu ausgelegt ist, den bisherigen Abstandsschwellenwert (TH) zyklisch durch einen neuen Abstandsschwellenwert (TH') zu ersetzen, wobei der neue Abstandsschwellenwert (TH') durch einen aktuell ermittelten Abstandswert (D, D1 - D4) abzüglich eines vorgegebenen ersten Hysteresenwerts (H) bestimmt ist, wenn der aktuell ermittelte Abstandswert (D, D1 - D4) größer ist als der bisherige Abstandsschwellenwert (TH), und/oder der neue Abstandsschwellenwert durch den aktuell ermittelten Abstandswert (D, D1 - D4) zuzüglich eines vorgegebenen zweiten Hysteresenwerts (H) bestimmt ist, wenn der aktuell ermittelte Abstandswert (D, D1 - D4) kleiner ist als der bisherige Abstandsschwellenwert (TH).

2. Triangulationslichttaster (10, 110. 210, 310) nach Anspruch 1,
**dadurch gekennzeichnet,**
**dass** der erste und der zweite Hysteresenwert (H) gleich sind.

3. Triangulationslichttaster (10, 110. 210, 310) nach Anspruch 1 oder 2,
**dadurch gekennzeichnet,**
**dass** der aus dem Abstandswert (D, D1 - D4) und einem der Hysteresenwerte (H) bestimmte neue Abstandsschwellenwert (TH') vor dem Ersetzen des bisherigen Abstandsschwellenwerts (TH) derart modifiziert wird, dass eine Änderung des neuen Abstandsschwellenwerts (TH') im Vergleich zu dem bisherigen Abstandsschwellenwert (TH) ein vorgegebenes Maß nicht überschreitet.

4. Triangulationslichttaster (10, 110. 210, 310) nach einem der vorhergehenden Ansprüche,
**dadurch gekennzeichnet,**
**dass** der Lichtsender (12) zumindest zwei Lichtquellen (14A - 14D) zum Aussenden von jeweiligen Sendelichtstrahlen (32A, 32B) umfasst, wobei die Lichtquellen (14A - 14D) derart angeordnet sind, dass die Sendelichtstrahlen (32A, 32B) an lateral voneinander beabstandeten Auftreffpunkten auf ein zu detektierendes Objekt (20) oder die Förderstrecke (18) treffen, wobei die Auswerteeinheit (28) dazu ausgelegt ist, für jeden Sendelichtstrahl (32A, 32B) einen jeweiligen Abstandswert (D, D1 - D4) zu ermitteln, und
wobei das Ersetzen des Abstandsschwellenwerts (TH) nur dann erfolgt, wenn die Differenz der für die voneinander beabstandeten Auftreffpunkte ermittelten jeweiligen Abstandswerte (D, D1 - D4) kleiner ist als ein vorgegebener Differenzschwellenwert (THD).

5. Triangulationslichttaster (10, 110. 210, 310) nach Anspruch 4,
**dadurch gekennzeichnet,**
**dass** das Ersetzen des Abstandsschwellenwerts (TH) ferner nur dann erfolgt, wenn die Differenz der für die voneinander beabstandeten Auftreffpunkte ermittelten jeweiligen Abstandswerte (D, D1 - D4) für eine vorbestimmte Zeitdauer kleiner ist als der vorgegebene Differenzschwellenwert (THD).

6. Triangulationslichttaster (10, 110. 210, 310) nach Anspruch 4 oder 5,
**dadurch gekennzeichnet,**
**dass** das Ersetzen des Abstandsschwellenwerts (TH) derart erfolgt, dass für eine vorgegebene Anzahl von Zyklen jeweilige momentane Abstandsschwellenwerte ermittelt werden und der neue Abstandsschwellenwert (TH') auf der Grundlage eines Mittelungsverfahrens aus den momentanen Abstandsschwellenwerten ermittelt wird.

7. Triangulationslichttaster (10, 110. 210, 310) nach einem der Ansprüche 4 bis 6,
**dadurch gekennzeichnet,**
**dass** die Auftreffpunkte zumindest entlang einer Förderrichtung (F) der Förderstrecke (18) voneinander beabstandet sind.

**8.** Triangulationslichttaster (10, 110. 210, 310) nach einem der Ansprüche 4 bis 7,
**dadurch gekennzeichnet,**
**dass** die Lichtquellen (14A - 14D) derart angeordnet sind, dass die von den jeweiligen Sendelichtstrahlen (32A, 32B) auf dem Lichtempfänger (22, 122) erzeugten Lichtflecke (38A, 38B) für gleiche Abstände der jeweiligen Auftreffpunkte von dem Triangulationslichttaster (10, 110. 210, 310) voneinander beabstandet sind, insbesondere in der Triangulationsrichtung (T).

**9.** Triangulationslichttaster (10, 110. 210, 310) nach einem der Ansprüche 4 bis 8,
**dadurch gekennzeichnet,**
**dass** die Lichtquellen (14A - 14D) zeitlich versetzt getaktet aktivierbar sind, so dass zu einem gegebenen Zeitpunkt nur eine der Lichtquellen (14A - 14D) Sendelicht aussendet.

**10.** Triangulationslichttaster (10, 110. 210, 310) nach einem der Ansprüche 4 bis 9,
**dadurch gekennzeichnet,**
**dass** die Triangulationsrichtung (T) parallel zu einer Förderrichtung (F) der Förderstrecke (18) verläuft.

**11.** Triangulationslichttaster (210) nach einem der Ansprüche 4 bis 10,
**dadurch gekennzeichnet,**
**dass** der Lichtsender (12) drei Lichtquellen (14A - 14C) umfasst,
wobei jeweils zwei der Lichtquellen (14A - 14C) auf einer von zwei Geraden liegt, welche sich in einer der Lichtquellen (14A - 14C) in einem rechten Winkel schneiden, und wobei eine der Geraden parallel zu der Triangulationsrichtung (T) verläuft.

**12.** Triangulationslichttaster (210) nach Anspruch 11,
**dadurch gekennzeichnet,**
**dass** für einen Betrieb des Lichttasters (210) nur Abstandswerte (D1 - D3) für zwei Lichtquellen (14A - 14C) ermittelt oder berücksichtigt werden.

**13.** Triangulationslichttaster (310) nach einem der Ansprüche 4 bis 10,
**dadurch gekennzeichnet,**
**dass** der Lichtsender (12) vier Lichtquellen (14A - 14D) umfasst, welche auf Eckpunkten eines gedachten Rechtecks, insbesondere Quadrats, angeordnet sind, wobei eine der Seiten des Rechtecks parallel zur Triangulationsrichtung (T) verläuft.

**14.** Triangulationslichttaster (10, 110. 210, 310) nach einem der Ansprüche 4 bis 13,
**dadurch gekennzeichnet,**
**dass** der Abstand der Lichtquellen (14A - 14D) kleiner oder gleich 1 mm, vorzugsweise kleiner oder gleich 200 $\mu$m, ist.

**15.** Triangulationslichttaster (10, 110. 210, 310) nach einem der Ansprüche 4 bis 14,
**dadurch gekennzeichnet,**
**dass** die Lichtquellen (14A - 14D) auf einem einzigen Träger, vorzugsweise auf einem einzigen Halbleitersubstrat, besonders vorzugsweise in Form einer Multipixel-LED, integriert sind.

**Claims**

**1.** A triangulation light sensor (10, 110, 210, 310) for the detection of objects (20) on a conveying path (18), comprising a light transmitter (12) for transmitting transmitted light into a detection zone (16) which extends over a partial region of the conveying path (18);
a light receiver (22, 122) having an array of reception elements (24, 124) for receiving light which is remitted from the detection zone (16) by an object (20) to be detected or by the conveying path (18), wherein the array of reception elements (24, 124) extends at least in a triangulation direction (T), and wherein the reception elements (24, 124) generate respective received signals;
a reception optics (26) arranged in the optical path between the detection zone (16) and the light receiver (24) for generating at least one light spot (36A - 36D) from the remitted light on the light receiver (22, 122), wherein the position of the at least one light spot (36A - 36D) on the light receiver (22, 122) in the triangulation direction (T) results in dependence on the distance of a point of incidence of the transmitted light on an object (20) to be detected or on the conveying path (18) from the triangulation light sensor (10, 110, 210, 310); and

an evaluation unit (28) which is configured for generating an object detection signal (Q) from the received signals, wherein an object detection signal (Q) is only generated when a distance value (D, D1 - D4) of the point of incidence determined with reference to the position of the at least one light spot (36A - 36D) on the light receiver (22, 122) falls below a predefined distance threshold value (TH),

**characterized in that**

the evaluation unit (28) is configured to replace the previous distance threshold value (TH) cyclically with a new distance threshold value (TH'), with the new distance threshold value (TH') being determined by a currently determined distance value (D, D1 - D4) less a predefined first hysteresis value (H) when the currently determined distance value (D, D1 - D4) is greater than the previous distance threshold value (TH) and/or the new distance threshold value is determined by the currently determined distance value (D, D1 - D4) plus a predefined second hysteresis value (H) when the currently determined distance value (D, D1 - D4) is smaller than the previous distance threshold value (TH).

2. A triangulation light sensor (10, 110, 210, 310) in accordance with claim 1,
   **characterized in that**
   the first and second hysteresis values (H) are the same.

3. A triangulation light sensor (10, 110, 210, 310) in accordance with claim 1 or claim 2,
   **characterized in that**
   the new distance threshold value (TH') determined from the distance value (D, D1 - D4) and one of the hysteresis values (H) is modified before the replacement of the previous distance threshold value (TH) such that a change of the new distance threshold value (TH') does not exceed a predefined measure in comparison with the previous distance threshold value (TH).

4. A triangulation light sensor (10, 110, 210, 310) in accordance with any one of the preceding claims,
   **characterized in that**
   the light transmitter (12) comprises at least two light sources (14A - 14D) for transmitting respective transmitted light beams (32A, 32B),
   with the light sources (14A - 14D) being arranged such that the transmitted light beams (32A, 32B) are incident on an object to be detected (20) or on the conveying path (18) at laterally mutually spaced apart points of incidence, with the evaluation unit (28) being configured to determine a respective distance value (D, D1 - D4) for each transmitted light beam (32A, 32B); and
   with the replacement of the distance threshold value (TH) only taking place when the difference of the respective distance values (D, D1 - D4) determined for the mutually spaced apart points of incidence is smaller than a predefined difference threshold value (THD).

5. A triangulation light sensor (10, 110, 210, 310) in accordance with claim 4,
   **characterized in that**
   the replacement of the distance threshold value (TH) further only takes place when the difference of the respective distance values (D, D1 - D4) determined for the mutually spaced apart points of incidence is smaller for a predetermined time period than the predefined difference threshold value (THD).

6. A triangulation light sensor (10, 110, 210, 310) in accordance with claim 4 or claim 5,
   **characterized in that**
   the replacement of the distance threshold value (TH) takes place such that respective instantaneous distance threshold values are determined for a predefined number of cycles and the new distance threshold value (TH') is determined on the basis of an averaging process from the instantaneous distance threshold values.

7. A triangulation light sensor (10, 110, 210, 310) in accordance with any one of the claims 4 to 6,
   **characterized in that**
   the points of incidence are at least spaced apart from one another along a conveying direction (F) of the conveying path (18).

8. A triangulation light sensor (10, 110, 210, 310) in accordance with any one of the claims 4 to 7,
   **characterized in that**
   the light sources (14A - 14D) are arranged such that the light spots (38A, 38B) generated on the light receiver (22, 122) by the respective transmitted light beams (32A, 32B) are spaced apart from one another, in particular in the triangulation direction (T), for the same distances of the respective points of incidence from the triangulation light sensor (10, 110, 210, 310).

9. A triangulation light sensor (10, 110, 210, 310) in accordance with any one of the claims 4 to 8, **characterized in that** the light sources (14A - 14D) can be activated in a time-offset, clocked manner so that only one of the light sources (14A - 14D) transmits transmitted light at a given point in time.

10. A triangulation light sensor (10, 110, 210, 310) in accordance with any one of the claims 4 to 9, **characterized in that** the triangulation direction (T) extends in parallel with a conveying direction (F) of the conveying path (18).

11. A triangulation light sensor (210) in accordance with any one of the claims 4 to 10, **characterized in that** the light transmitter (12) comprises three light sources (14A - 14C), with a respective two of the light sources (14A - 14C) being disposed on one of two straight lines which intersect at a right angle in one of the light sources (14A - 14C), and with one of the straight lines extending in parallel with the triangulation direction (T).

12. A triangulation light sensor (210) in accordance with claim 11, **characterized in that** only distance values (D1 - D3) for two light sources (14A - 14C) are determined or taken into account for an operation of the light sensor (210).

13. A triangulation light sensor (310) in accordance with any one of the claims 4 to 10, **characterized in that** the light transmitter (12) comprises four light sources (14A - 14D) which are arranged on corner points of an imaginary rectangle, in particular of a square, with one of the sides of the rectangle extending in parallel with the triangulation direction (T).

14. A triangulation light sensor (10, 110, 210, 310) in accordance with any one of the claims 4 to 13, **characterized in that** the distance of the light sources (14A - 14D) is smaller than or equal to 1 mm, preferably smaller than or equal to 200 $\mu$m.

15. A triangulation light sensor (10, 110, 210, 310) in accordance with any one of the claims 4 to 14, **characterized in that** the light sources (14A - 14D) are integrated on a single carrier, preferably on a single semiconductor substrate, particularly preferably in the form of a multipixel LED.

**Revendications**

1. Capteur photoélectrique à triangulation (10, 110. 210, 310) pour la détection d'objets (20) sur un trajet de convoyage (18) (18), comportant un émetteur de lumière (12) pour émettre de la lumière d'émission dans une zone de détection (16) qui s'étend sur une zone partielle du trajet de convoyage (18), un récepteur de lumière (22, 122) comprenant un réseau d'éléments de réception (24, 124) pour recevoir la lumière réémise de la zone de détection (16) par un objet à détecter (20) ou par le trajet de convoyage (18), le réseau d'éléments de réception (24, 124) s'étendant au moins dans une direction de triangulation (T), et les éléments de réception (24, 124) générant des signaux de réception respectifs, une optique de réception (26) disposée dans le chemin optique entre la zone de détection (16) et le récepteur de lumière (24) pour générer au moins un spot lumineux (36A - 36D) sur le récepteur de lumière (22, 122) à partir de la lumière réémise, la position dudit au moins un spot lumineux (36A - 36D) sur le récepteur de lumière (22, 122) dans la direction de triangulation (T) étant définie en fonction de la distance d'un point d'incidence de la lumière d'émission sur un objet à détecter (20) ou sur le trajet de convoyage (18) par rapport au capteur photoélectrique à triangulation (10, 110. 210, 310), et une unité d'évaluation (28) qui est conçue pour générer un signal de détection d'objet (Q) à partir des signaux reçus, un signal de détection d'objet (Q) n'étant généré que si une valeur de distance (D, D1 - D4) du point d'incidence, déterminée sur la base de la position dudit au moins un spot lumineux (36A - 36D) sur le récepteur de lumière (22, 122), tombe en dessous d'une valeur seuil de distance prédéterminée (TH),
**caractérisé en ce que**
l'unité d'évaluation (28) est conçue pour remplacer cycliquement l'ancienne valeur seuil de distance (TH) par une nouvelle valeur seuil de distance (TH'), la nouvelle valeur seuil de distance (TH') étant déterminée par une valeur de distance actuellement déterminée (D, D1 - D4), déduction faite d'une première valeur d'hystérésis prédéfinie (H), si la valeur de distance actuellement déterminée (D, D1 - D4) est supérieure à l'ancienne valeur seuil de distance (TH), et/ou la nouvelle valeur seuil de distance étant déterminée par la valeur de distance actuellement déterminée (D, D1 - D4), majorée d'une deuxième valeur d'hystérésis prédéfinie (H), si la valeur de distance actuellement déterminée (D, D1 - D4) est inférieure à l'ancienne valeur seuil de distance (TH).

2.  Capteur photoélectrique à triangulation (10, 110. 210, 310) selon la revendication 1,
    **caractérisé en ce que**
    la première et la deuxième valeur d'hystérésis (H) sont égales.

3.  Capteur photoélectrique à triangulation (10, 110. 210, 310) selon la revendication 1 ou 2,
    **caractérisé en ce que**
    avant de remplacer l'ancienne valeur seuil de distance (TH), la nouvelle valeur seuil de distance (TH') déterminée par la valeur de distance (D, D1 - D4) et par l'une des valeurs d'hystérésis (H) est modifiée de telle sorte qu'une modification de la nouvelle valeur seuil de distance (TH') ne dépasse pas une ampleur prédéfinie par comparaison à l'ancienne valeur seuil de distance (TH).

4.  Capteur photoélectrique à triangulation (10, 110. 210, 310) selon l'une des revendications précédentes,
    **caractérisé en ce que**
    l'émetteur de lumière (12) comprend au moins deux sources lumineuses (14A - 14D) pour émettre des faisceaux lumineux d'émission respectifs (32A, 32B), et
    les sources lumineuses (14A - 14D) sont disposées de telle sorte que les faisceaux lumineux d'émission (32A, 32B) tombent sur un objet à détecter (20) ou sur le trajet de convoyage (18) à des points d'incidence latéralement espacés les uns des autres, l'unité d'évaluation (28) étant conçue pour déterminer une valeur de distance respective (D, D1 - D4) pour chaque faisceau lumineux d'émission (32A, 32B), et
    le remplacement de la valeur seuil de distance (TH) ne s'effectue que si la différence des valeurs de distance respectives (D, D1 - D4) déterminées pour les points d'incidence espacés les uns des autres est inférieure à une valeur seuil de différence prédéfinie (THD).

5.  Capteur photoélectrique à triangulation (10, 110. 210, 310) selon la revendication 4,
    **caractérisé en ce que**
    le remplacement de la valeur seuil de distance (TH) ne s'effectue en outre que si la différence des valeurs de distance respectives (D, D1 - D4) déterminées pour les points d'incidence espacés les uns des autres est inférieure à la valeur seuil de différence prédéfinie (THD) pendant une durée temporelle prédéfinie.

6.  Capteur photoélectrique à triangulation (10, 110. 210, 310) selon la revendication 4 ou 5,
    **caractérisé en ce que**
    le remplacement de la valeur seuil de distance (TH) s'effectue de telle sorte que des valeurs seuils de distance momentanées respectives sont déterminées pour un nombre prédéfini de cycles et que la nouvelle valeur seuil de distance (TH') est déterminée sur la base d'une procédure de formation de la moyenne à partir des valeurs seuils de distance momentanées.

7.  Capteur photoélectrique à triangulation (10, 110. 210, 310) selon l'une des revendications 4 à 6,
    **caractérisé en ce que**
    les points d'incidence sont espacés les uns des autres au moins suivant une direction de convoyage (F) du trajet de convoyage (18).

8.  Capteur photoélectrique à triangulation (10, 110. 210, 310) selon l'une des revendications 4 à 7,
    **caractérisé en ce que**
    les sources lumineuses (14A - 14D) sont disposées de telle sorte que les spots lumineux (38A, 38B) générés par les faisceaux lumineux d'émission respectifs (32A, 32B) sur le récepteur de lumière (22, 122) sont espacés les uns des autres, en particulier dans la direction de triangulation (T), pour des distances identiques des points d'incidence respectifs par rapport au capteur photoélectrique à triangulation (10, 110. 210, 310).

**9.** Capteur photoélectrique à triangulation (10, 110. 210, 310) selon l'une des revendications 4 à 8,
**caractérisé en ce que**
les sources lumineuses (14A - 14D) peuvent être activées à des intervalles temporels décalés, de sorte qu'une seule des sources lumineuses (14A-14D) émet de la lumière d'émission à un instant donné.

**10.** Capteur photoélectrique à triangulation (10, 110. 210, 310) selon l'une des revendications 4 à 9,
**caractérisé en ce que**
la direction de triangulation (T) s'étend parallèlement à une direction de convoyage (F) du trajet de convoyage (18).

**11.** Capteur photoélectrique à triangulation (210) selon l'une des revendications 4 à 10,
**caractérisé en ce que**
l'émetteur de lumière (12) comprend trois sources lumineuses (14A - 14C), deux des sources lumineuses (14A - 14C) se situant sur l'une parmi deux lignes droites qui se croisent à angle droit dans l'une des sources lumineuses (14A - 14C), l'une des lignes droites étant parallèle à la direction de la triangulation (T).

**12.** Capteur photoélectrique à triangulation (210) selon la revendication 11,
**caractérisé en ce que**
pour un fonctionnement du capteur photoélectrique (210), seules les valeurs de distance (D1 - D3) pour deux sources lumineuses (14A - 14C) sont déterminées ou prises en compte.

**13.** Capteur photoélectrique à triangulation (310) selon l'une des revendications 4 à 10,
**caractérisé en ce que**
l'émetteur de lumière (12) comprend quatre sources lumineuses (14A - 14D) qui sont disposées aux points d'angle d'un rectangle imaginaire, en particulier d'un carré, l'un des côtés du rectangle étant parallèle à la direction de triangulation (T).

**14.** Capteur photoélectrique à triangulation (10, 110. 210, 310) selon l'une des revendications 4 à 13,
**caractérisé en ce que**
la distance des sources lumineuses (14A - 14D) est inférieure ou égale à 1 mm, de préférence inférieure ou égale à 200 $\mu$m.

**15.** Capteur photoélectrique à triangulation (10, 110. 210, 310) selon l'une des revendications 4 à 14,
**caractérisé en ce que**
les sources lumineuses (14A - 14D) sont intégrées sur un seul support, de préférence sur un seul substrat semi-conducteur, en particulier de préférence sous la forme d'une LED multi-pixels.

## Fig.1

(Stand der Technik)

# Fig.2

## Fig.3

34    36A    36B    10

14A    14B

24    38A    22    38B    26    30    F,T

## Fig.4

14A    14B

110    30    26

F

T

36A
36B    38A
38B    122
124    34

## Fig.5

**Fig.6**

210

34

36A    36B    14A    14B

24

22

36C

T

**Fig.7**

310

34

124

36A    36B    14A    14B

122

36C    36D    14C    14D

T

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10059156 A1
- DE 19962701 A1
- DE 10138609 A1
- DE 202014103068 U1
- DE 19966701 A1